# FASCICULE DE BREVET EUROPEEN

(11) **EP 2 356 071 B1**
(45) Date de publication et mention de la délivrance du brevet: **28.08.2013**
(21) Numéro de dépôt: 09772547.7
(22) Date de dépôt: 03.07.2009
(51) Int. Cl.: C01B 33/193

(54) **PROCEDE DE PREPARATION DE SILICE PRECIPITEE A PARTIR DE METABISULFITE OU SULFITE DE SODIUM**
Verfahren zur Herstellung gefällte Kieselsäure aus Natriummetabisulfit oder Natriumsulfit
METHOD FOR PREPARING PRECIPITATED SILICA FROM SODIUM METABISULFITE OR SODIUM SULFITE

(30) Priorité: 04.07.2008 FR 0803810
(43) Date de publication de la demande: 17.08.2011
(73) Titulaire: Rhodia Opérations, 93306 Aubervilliers (FR)
(72) Inventeur: PINAULT, Anne-Laure, F-92160 Antony (FR); RACINOUX, Joël, F-69270 Rochetaillée sur Saône (FR); PECHKUROV, Petro, 04123 Kiev (UA)
(74) Mandataire: Delenne, Marc
(86) Numéro de dépôt international: PCT/EP2009/058440
(87) Numéro de publication internationale: WO 2010/000847

(56) Documents cités:
- WO-A-2006/131066
- DE-A1- 3 938 730

## Description

La présente invention est relative à l'utilisation métabisulfite de sodium ou de sulfite de sodium pour produire de la silice précipitée.

Elle concerne en particulier un procédé de préparation de silice précipitée mettant en oeuvre comme matière première, d'une part, du sable et, d'autre part, du métabisulfite de sodium (Na₂S₂O₅) ou du sulfite de sodium (Na₂SO₃).

La silice précipitée peut être utilisée dans des domaines variés.

Il est ainsi connu d'employer la silice précipitée comme charge blanche renforçante dans les polymères, les élastomères (par exemple les élastomères diéniques), notamment dans les articles finis tels que les semelles de chaussures, les pneumatiques, les revêtements de sols, les matériaux ignifugeants, les pièces techniques telles que les galets de téléphériques, les joints, les gaines, les cables et les courroies de transmission, en général en association avec un agent de couplage.

Elle peut être également utilisée comme absorbant de matières actives ; elle peut être mise en oeuvre comme support de liquides, par exemple employés dans l'alimentation, tels que les vitamines (vitamine E), le chlorure de choline.

Elle est aussi employée comme support de catalyseur, comme agent viscosant, texturant ou anti-mottant, comme élément pour séparateurs de batteries, comme additif pour dentifrice, peinture, papier, comme matériau isolant.

Les procédés de préparation de silice précipitée connus s'effectuent généralement par réaction de précipitation d'un silicate de sodium avec de l'acide sulfurique, avec obtention d'une suspension de silice précipitée, puis séparation, en particulier par filtration (avec obtention d'un gâteau de filtration, qui peut être ensuite lavé et/ou délité), de la silice précipitée obtenue et enfin séchage.

Le silicate de sodium utilisé dans ces procédés est préalablement obtenu par réaction de sable avec de grandes quantités de carbonate de sodium (d'où un coût élevé), ou avec du sulfate de sodium nécessitant la présence d'un agent réducteur comme le carbone.

Le but de l'invention est de proposer une alternative aux procédés connus de préparation de silice précipitée à partir de sable (sable quartzique), ne nécessitant pas l'emploi de carbonate de sodium, de sulfate de sodium, d'acide sulfurique, de CO₂ et d'agent réducteur, tel que le carbone, pour obtenir le silicate de sodium intermédiaire.

Ainsi l'invention consiste d'abord en l'utilisation de métabisulfite de sodium ou de sulfite de sodium pour produire de la silice précipitée, selon le schéma réactionnel (R) ((R) = (1) + (2) + de préférence (3)) ou le schéma réactionnel (R') ((R') = (1') + (2')) ci-dessous :
(R)

   (1) Na₂S₂O₅ + nSiO₂ (sable) → Na₂O,nSiO₂ + 2SO₂

   (2) 2SO₂ + Na₂O,nSiO₂ + H₂O → nSiO₂ (silice) + 2NaHSO₃

   de préférence

   (3) 2NaHSO₃ → Na₂S₂O₅ + H₂O
(R')

   (1') Na₂SO₃ + nSiO₂ (sable) → Na₂O,nSiO₂ + SO₂

   (2') SO₂ + Na₂O,nSiO₂ → nSiO₂ (silice) + Na₂SO₃

De manière préférée, dans le schéma réactionnel (R), la réaction (3) est mise en oeuvre (en particulier par apport de chaleur (séchage/condensation, selon un mécanisme type évaporation-cristallisation) et le métabisulfite de sodium (Na₂S₂O₅) obtenu dans cette réaction (3) est utilisé comme matière première dans la réaction (1), c'est-à-dire est (au moins en partie, en général en totalité) recyclé vers / réutilisé pour la réaction (1).

De même, dans le schéma réactionnel (R'), de préférence, le sulfite de sodium (Na₂SO₃) obtenu dans la réaction (2') est utilisé comme matière première dans la réaction (1'), c'est-à-dire est (au moins en partie, en général en totalité) recyclé vers / réutilisé pour la réaction (1').

L'utilisation de métabisulfite de sodium (schéma réactionnel (R)) est la variante préférée de l'invention.

L'invention propose en outre un procédé de préparation de silice précipitée à partir de sable (sable quartzique) et de métabisulfite de sodium, caractérisé en ce qu'il comprend les étapes suivantes :
a) on mélange du sable et du métabisulfite de sodium, de préférence dans les proportions massiques suivantes : 40 à 60 %, en particulier 44 à 57 %, de sable, et 60 à 40 %, en particulier 56 à 43 %, de métabisulfite de sodium ;
b) on porte le mélange obtenu à une température comprise entre 1200 et 1600 °C (à la fusion), en particulier entre 1300 et 1500 °C, par exemple sous air ou sous azote, notamment dans un four, pour produire du silicate de sodium solide (vitreux) et de l'anhydride sulfureux SO₂ ;
c) on dissout (solubilise) ensuite ledit silicate de sodium solide dans de l'eau, notamment dans une proportion pondérale de 10 à 40 %, par exemple 12 à 36 %, de silicate pour 90 à 60 %, en particulier 88 à 64 %, d'eau, en particulier à une température supérieure à 150 °C et pendant par exemple au moins 20 minutes, afin d'obtenir, éventuellement après filtration, une solution aqueuse de silicate de sodium ;
d) on fait réagir de l'anhydride sulfureux SO₂, avantageusement l'anhydride sulfureux SO₂ obtenu à l'étape b), avec ladite solution aqueuse de silicate de sodium, éventuellement en présence supplémentaire d'eau (notamment selon le mode et/ou les concentrations souhaités pour la précipitation de la silice), la réaction étant de préférence mise en oeuvre à une température comprise entre 60 et 100 °C et par exemple pendant 15 à 180 minutes, afin d'obtenir un mélange contenant de la silice précipitée et de l'hydrogénosulfite de sodium NaHSO₃ (dans des eaux mères) ;
e) on sépare la silice précipitée de l'hydrogénosulfite de sodium, notamment par filtration.

L'anhydride sulfureux obtenu à l'étape b) est avantageusement employé dans l'étape d), notamment sous forme gazeuse ou en solution. Ainsi, avant son utilisation dans l'étape d), il peut avoir été séparé des fumées que l'on obtient lors de l'étape b), puis éventuellement liquéfié ; ou il peut avoir été absorbé dans de l'eau (on utilise alors dans l'étape d) une solution aqueuse préparée par absorption de l'anhydride sulfureux contenu dans les fumées obtenues lors de l'étape b)).

En général, dans l'étape e), le mélange obtenu à l'étape d) est soumis à une filtration, et :
- le gâteau de filtration résultant est, éventuellement après une acidification (par exemple jusqu'à une valeur de pH du gâteau comprise entre 3 et 6,5), pouvant être suivie d'une (autre) filtration, lavé (notamment à l'eau) et séché, pour obtenir une silice précipitée ;
- de préférence, le filtrat, contenant l'hydrogénosulfite de sodium, est séché (par tout moyen connu), pour obtenir (en particulier par condensation de l'hydrogénosulfite de sodium, selon un mécanisme type évaporation-cristallisation) du métabisulfite de sodium, qui est recyclé vers l'étape a).

De manière avantageuse, du métabisulfite de sodium est donc produit et utilisé comme matière première pour préparer le silicate de sodium solide (recyclage).

Ce procédé selon l'invention, qui est de préférence effectué en continu, est simple et permet une diminution du coût et une réduction, voire une absence, de rejets dans l'environnement.

L'invention propose également un procédé de préparation de silice précipitée à partir de sable (sable quartzique) et de sulfite de sodium, caractérisé en ce qu'il comprend les étapes suivantes :
a) on mélange du sable et du sulfite de sodium, de préférence dans les proportions massiques suivantes : 50 à 70 %, en particulier 54 à 66 %, de sable, et 50 à 30 %, en particulier 46 à 34 %, en poids de sulfite de sodium ;
b) on porte le mélange obtenu à une température comprise entre 1200 et 1600 °C (à la fusion), en particulier entre 1300 et 1500 °C, par exemple sous air ou sous azote, notamment dans un four, pour produire du silicate de sodium solide (vitreux) et de l'anhydride sulfureux SO₂ ;
c) on dissout (solubilise) ensuite ledit silicate de sodium solide dans de l'eau, notamment dans une proportion pondérale de 10 à 40 % par exemple 12 à 36 %, de silicate pour 90 à 60 %, en particulier 88 à 64 %, d'eau, en particulier à une température supérieure à 150 °C et pendant par exemple au moins 20 minutes, afin d'obtenir, éventuellement après filtration, une solution aqueuse de silicate de sodium ;
d) on fait réagir de l'anhydride sulfureux SO₂, avantageusement l'anhydride sulfureux SO₂ obtenu à l'étape b), avec ladite solution aqueuse de silicate de sodium, éventuellement en présence supplémentaire d'eau (notamment selon le mode et/ou les concentrations souhaités pour la précipitation de la silice), la réaction étant de préférence mise en oeuvre à une température comprise entre 60 et 100 °C et par exemple pendant 15 à 180 minutes, afin d'obtenir un mélange contenant de la silice précipitée et du sulfite de sodium ; en général, on arrête la réaction (précipitation) lorsque le pH du milieu réactionnel atteint une valeur comprise entre 8,0 et 8,2 ;
e) on sépare la silice précipitée du sulfite de sodium, notamment par filtration.

L'anhydride sulfureux obtenu à l'étape b) est avantageusement employé dans l'étape d), notamment sous forme gazeuse ou en solution. Ainsi, avant son utilisation dans l'étape d), il peut avoir été séparé des fumées que l'on obtient lors de l'étape b), puis éventuellement liquéfié ; ou il peut avoir été absorbé dans de l'eau (on utilise alors dans l'étape d) une solution aqueuse préparée par absorption de l'anhydride sulfureux contenu dans les fumées obtenues lors de l'étape b)).

En général, dans l'étape e), le mélange obtenu à l'étape d) est soumis à une filtration, et :
- le gâteau de filtration résultant est, éventuellement après une acidification (par exemple jusqu'à une valeur de pH du gâteau comprise entre 3 et 6,5), pouvant être suivie d'une (autre) filtration, lavé (notamment à l'eau) et séché, pour obtenir une silice précipitée ;
- de préférence, le filtrat, contenant le sulfite de sodium, est, éventuellement après séchage (par tout moyen connu), recyclé vers l'étape a).

De manière avantageuse, on utilise du sulfite de sodium produit au cours du procédé comme matière première pour préparer le silicate de sodium solide (recyclage).

Ce procédé selon l'invention, qui est de préférence effectué en continu, est simple et permet une diminution du coût et une réduction, voire une absence, de rejets dans l'environnement.

La séparation mise en oeuvre dans les procédés de l'invention (étape e)) comprend habituellement une filtration, suivie d'un lavage si nécessaire.

Dans l'invention, la (les) filtration(s) s'effectue(nt) selon toute méthode convenable, par exemple au moyen d'un filtre presse, d'un filtre à bande, d'un filtre sous vide.

Le séchage du gâteau de filtration peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à bille. Le délitage est généralement effectué en présence d'un composé de l'aluminium, en particulier d'aluminate de sodium et, éventuellement, en présence d'une faible quantité d'agent acidifiant (dans ce dernier cas, le composé de l'aluminium et l'agent acidifiant sont généralement ajoutés de manière simultanée). L'opération de délitage permet notamment d'abaisser la viscosité du produit à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par l'invention permettent, entre autre, d'accéder de manière simple à des granulés, notamment par des opérations classiques de mise en forme, telles que par exemple une granulation ou un compactage.

## Revendications

1. Utilisation de métabisulfite de sodium ou de sulfite de sodium pour produire de la silice précipitée, selon l'un des schémas réactionnels (R) ou (R') suivants :
(R)
(1) Na₂S₂O₅ + nSiO₂ (sable) → Na₂O,nSiO₂ + 2SO₂
(2) 2SO₂ + Na₂O,nSiO₂ + H₂O → nSiO₂ (silice) + 2NaHSO₃
éventuellement
(3) 2NaHSO₃ → Na₂S₂O₅ + H₂O
(R')
(1') Na₂SO₃ + nSiO₂ (sable) → Na₂O,nSiO₂ + SO₂
(2') SO₂ + Na₂O,nSiO₂ → nSiO₂ (silice) + Na₂SO₃

2. Utilisation selon la revendication 1, selon le schéma réactionnel (R), dans laquelle le métabisulfite de sodium obtenu dans la réaction (3) est utilisé comme matière première dans la réaction (1).

3. Utilisation selon la revendication 1, selon le schéma réactionnel (R'), dans laquelle le sulfite de sodium obtenu dans la réaction (2') est utilisé comme matière première dans la réaction (1').

4. Procédé de préparation de silice précipitée à partir de sable et de métabisulfite de sodium, **caractérisé en ce qu'**il comprend les étapes suivantes :
a) on mélange du sable et du métabisulfite de sodium, de préférence dans les proportions massiques suivantes : 40 à 60 %, en particulier 44 à 57 %, de sable, et 60 à 40 %, en particulier 56 à 43 %, de métabisulfite de sodium ;
b) on porte le mélange obtenu à une température comprise entre 1200 et 1600 °C, en particulier entre 1300 et 1500 °C, pour produire du silicate de sodium solide et de l'anhydride sulfureux SO₂ ;
c) on dissout ensuite ledit silicate de sodium dans de l'eau, notamment dans une proportion pondérale de 10 à 40 %, par exemple 12 à 36 %, de silicate pour 90 à 60 %, en particulier 88 à 64 %, d'eau, afin d'obtenir, éventuellement après filtration, une solution aqueuse de silicate de sodium ;
d) on fait réagir de l'anhydride sulfureux SO₂, de préférence l'anhydride sulfureux obtenu à l'étape b), avec ladite solution aqueuse de silicate de sodium, éventuellement en présence supplémentaire d'eau, la réaction étant de préférence mise en oeuvre à une température comprise entre 60 et 100 °C et par exemple pendant 15 à 180 minutes, afin d'obtenir un mélange contenant de la silice précipitée et de l'hydrogénosulfite de sodium ;
e) on sépare la silice précipitée de l'hydrogénosulfite de sodium, notamment par filtration.

5. Procédé selon la revendication 4, **caractérisé en ce que**, dans l'étape e), le mélange obtenu à l'étape d) est soumis à une filtration, et :
- le gâteau de filtration résultant est, éventuellement après une acidification, lavé et séché, pour obtenir une silice précipitée ;
- de préférence, le filtrat, contenant l'hydrogénosulfite de sodium, est séché, pour obtenir du métabisulfite de sodium, qui est recyclé vers l'étape a).

6. Procédé de préparation de silice précipitée à partir de sable et de sulfite de sodium, **caractérisé en ce qu'**il comprend les étapes suivantes :
a) on mélange du sable et du sulfite de sodium, de préférence dans les proportions massiques suivantes : 50 à 70 %, en particulier 54 à 66 %, de sable, et 50 à 30 %, en particulier 46 à 34 %, en poids de sulfite de sodium ;
b) on porte le mélange obtenu à une température comprise entre 1200 et 1600 °C, en particulier entre 1300 et 1500 °C, pour produire du silicate de sodium solide et de l'anhydride sulfureux SO₂ ;
c) on dissout ensuite ledit silicate de sodium dans de l'eau, notamment dans une proportion pondérale de 10 à 40 % par exemple 12 à 36 %, de silicate pour 90 à 60 %, en particulier 88 à 64 %, d'eau, afin d'obtenir, éventuellement après filtration, une solution aqueuse de silicate de sodium ;
d) on fait réagir de l'anhydride sulfureux SO₂, de préférence l'anhydride sulfureux obtenu à l'étape b), avec ladite solution aqueuse de silicate de sodium, éventuellement en présence supplémentaire d'eau, la réaction étant de préférence mise en oeuvre à une température comprise entre 60 et 100 °C et par exemple pendant 15 à 180 minutes, afin d'obtenir un mélange contenant de la silice précipitée et du sulfite de sodium ;
e) on sépare la silice précipitée du sulfite de sodium, notamment par filtration.

7. Procédé selon la revendication 6, **caractérisé en ce que**, dans l'étape e), le mélange obtenu à l'étape d) est soumis à une filtration, et :
- le gâteau de filtration résultant est, éventuellement après une acidification, lavé et séché, pour obtenir une silice précipitée ;
- de préférence, le filtrat, contenant le sulfite de sodium, est, éventuellement après séchage, recyclé vers l'étape a).

8. Procédé selon l'une des revendications 6 et 7, **caractérisé en ce que** l'on arrête la réaction de l'étape d) quand le pH atteint une valeur de 8,0 à 8,2.

## Patentansprüche

1. Verwendung von Natriummetabisulfit oder Natriumsulfit zur Herstellung von Fällungskieselsäure gemäß einem der folgenden Reaktionsschemata (R) oder (R'):
(R)
(1) Na₂S₂O₅ + nSiO₂ (Sand) → Na₂O,nSiO₂ + 2SO₂
(2) 2SO₂ + Na₂O,nSiO₂ + H₂O → nSiO₂ (Kieselsäure) + 2NaHSO₃
gegebenenfalls
(3) 2NaHSO₃ → Na₂S₂O₅ + H₂O
(R')
(1') Na₂SO₃ + nSiO₂ (Sand) → Na₂O,nSiO₂ + SO₂
(2') SO₂ + Na₂O,nSiO₂ → nSiO₂ (Kieselsäure) + Na₂SO₃

2. Verwendung nach Anspruch 1 gemäß Reaktionsschema (R), wobei das in Reaktion (3) erhaltene Natriummetabisulfit als Ausgangsstoff in Reaktion (1) verwendet wird.

3. Verwendung nach Anspruch 1 gemäß Reaktionsschema (R'), wobei das in Reaktion (2') erhaltene Natriumsulfit als Ausgangsstoff in Reaktion (1') verwendet wird.

4. Verfahren zur Herstellung von Fällungskieselsäure aus Sand und Natriummetabisulfit, **dadurch gekennzeichnet, dass** es die folgenden Schritte umfasst:
a) man mischt Sand und Natriummetabisulfit, vorzugsweise in den folgenden Massenanteilen: 40 bis 60%, insbesondere 44 bis 57%, Sand und 60 bis 40%, insbesondere 56 bis 43%, Natriummetabisulfit;
b) man bringt die erhaltene Mischung auf eine Temperatur zwischen 1200 und 1600°C, insbesondere zwischen 1300 und 1500°C, wobei man festes Natriumsilicat und Schwefeldioxid SO₂ erhält;
c) dann löst man das Natriumsilicat in Wasser, insbesondere in einem Gewichtsanteil von 10 bis 40%, beispielsweise 12 bis 36%, Silicat auf 90 bis 60%, insbesondere 88 bis 64%, Wasser, wobei man, gegebenenfalls nach Filtration, eine wässrige Natriumsilicatlösung erhält;
d) man setzt Schwefeldioxid SO₂, vorzugsweise das in Schritt b) erhaltene Schwefeldioxid, mit der wässrigen Natriumsilicatlösung um, gegebenenfalls in zusätzlicher Gegenwart von Wasser, wobei die Umsetzung vorzugsweise bei einer Temperatur zwischen 60 und 100°C und beispielsweise über einen Zeitraum von 15 bis 180 Minuten durchgeführt wird, wobei man ein Gemisch, das Fällungskieselsäure und Natriumhydrogensulfit enthält, erhält;
e) man trennt die Fällungskieselsäure von dem Natriumhydrogensulfit, insbesondere durch Filtration.

5. Verfahren nach Anspruch 4, **dadurch gekennzeichnet, dass** man in Schritt e) das in Schritt d) erhaltene Gemisch einer Filtration unterwirft und:
- den erhaltenen Filterkuchen, gegebenenfalls nach Ansäuern, wäscht und trocknet, wobei man eine Fällungskieselsäure erhält;
- das Natriumhydrogensulfit enthaltende Filtrat vorzugsweise trocknet, wobei man Natriummetabisulfit erhält, das in Schritt a) zurückgeführt wird.

6. Verfahren zur Herstellung von Fällungskieselsäure aus Sand und Natriumsulfit, **dadurch gekennzeichnet, dass** es die folgenden Schritte umfasst:
a) man mischt Sand und Natriumsulfit, vorzugsweise in den folgenden Massenanteilen: 50 bis 70%, insbesondere 54 bis 66%, Sand und 50 bis 30%, insbesondere 46 bis 34%, Natriumsulfit;
b) man bringt die erhaltene Mischung auf eine Temperatur zwischen 1200 und 1600°C, insbesondere zwischen 1300 und 1500°C, wobei man festes Natriumsilicat und Schwefeldioxid SO₂ erhält;
c) dann löst man das Natriumsilicat in Wasser, insbesondere in einem Gewichtsanteil von 10 bis 40%, beispielsweise 12 bis 36%, Silicat auf 90 bis 60%, insbesondere 88 bis 64%, Wasser, wobei man, gegebenenfalls nach Filtration, eine wässrige Natriumsilicatlösung erhält;
d) man setzt Schwefeldioxid SO₂, vorzugsweise das in Schritt b) erhaltene Schwefeldioxid, mit der wässrigen Natriumsilicatlösung um, gegebenenfalls in zusätzlicher Gegenwart von Wasser, wobei die Umsetzung vorzugsweise bei einer Temperatur zwischen 60 und 100°C und beispielsweise über einen Zeitraum von 15 bis 180 Minuten durchgeführt wird, wobei man ein Gemisch, das Fällungskieselsäure und Natriumsulfit enthält, erhält;
e) man trennt die Fällungskieselsäure von dem Natriumsulfit, insbesondere durch Filtration.

7. Verfahren nach Anspruch 6, **dadurch gekennzeichnet, dass** man in Schritt e) das in Schritt d) erhaltene Gemisch einer Filtration unterwirft und:
- den erhaltenen Filterkuchen, gegebenenfalls nach Ansäuern, wäscht und trocknet, wobei man eine Fällungskieselsäure erhält;
- das Natriumsulfit enthaltende Filtrat, gegebenenfalls nach Trocknung, in Schritt a) zurückführt.

8. Verfahren nach einem der Ansprüche 6 und 7, **dadurch gekennzeichnet, dass** man die Umsetzung von Schritt d) stoppt, wenn der pH-Wert einen Wert von 8,0 bis 8,2 erreicht.

## Claims

1. Use of sodium metabisulfite or sodium sulfite to produce precipitated silica, according to one of the reaction schemes (R) or (R') below:
(R)
(1) Na₂S₂O₅ + nSiO₂ (sand) → Na₂O, nSiO₂ + 2SO₂
(2) 2SO₂ + Na₂O,nSiO₂ + H₂O → nSiO₂ (silica) + 2NaHSO₃
preferably
(3) 2NaHSO₃ → Na₂S₂O₅ + H₂O
(R')
(1') Na₂SO₃ + nSiO₂ (sand) → Na₂O,nSiO₂ + SO₂
(2') SO₂ + Na₂O,nSiO₂ → nSiO₂ (silica) + Na₂SO₃

2. Use according to Claim 1, according to the reaction scheme (R), in which the sodium metabisulfite obtained in reaction (3) is used as starting material in reaction (1).

3. Use according to Claim 1, according to the reaction scheme (R'), in which the sodium sulfite obtained in reaction (2') is used as starting material in reaction (1').

4. Process for preparing precipitated silica from sand and sodium metabisulfite, **characterized in that** it comprises the following steps:
a) sand and sodium metabisulfite are mixed together, preferably in the following mass proportions:
40 to 60% and in particular 44 to 57% of sand, and 60 to 40% and in particular 56 to 43% of sodium metabisulfite;
b) the mixture obtained is brought to a temperature of between 1200 and 1600°C and in particular between 1300 and 1500°C, to produce solid sodium silicate and sulfur dioxide SO₂;
c) said sodium silicate is then dissolved in water, especially in a weight proportion of 10 to 40%, for example 12 to 36%, of silicate per 90 to 60% and in particular 88 to 64% of water, so as to obtain, optionally after filtration, an aqueous sodium silicate solution;
d) sulfur dioxide SO₂, preferably the sulfur dioxide obtained in step b), is reacted with said aqueous sodium silicate solution, optionally in the additional presence of water, the reaction preferably being performed at a temperature of between 60 and 100°C, and, for example, for 15 to 180 minutes, so as to obtain a mixture containing precipitated silica and sodium hydrogen sulfite;
e) the precipitated silica is separated from the sodium hydrogen sulfite, especially by filtration.

5. Process according to Claim 4, **characterized in that**, in step e), the mixture obtained in step d) is subjected to filtration, and:
- the resulting filter cake is, optionally after acidification, washed and dried, to obtain a precipitated silica;
- preferably, the filtrate, containing the sodium hydrogen sulfite, is dried, to obtain sodium metabisulfite, which is recycled into step a).

6. Process for preparing precipitated silica from sand and sodium sulfite, **characterized in that** it comprises the following steps:
a) sand and sodium sulfite are mixed together, preferably in the following mass proportions: 50 to 70% and in particular 54 to 66% of sand, and 50 to 30% and in particular 46 to 34% by weight of sodium sulfite;
b) the mixture obtained is brought to a temperature of between 1200 and 1600°C and in particular between 1300 and 1500°C, to produce solid sodium silicate and sulfur dioxide SO₂;
c) said sodium silicate is then dissolved in water, especially in a weight proportion of 10 to 40%, for example 12 to 36%, of silicate per 90 to 60% and in particular 88 to 64% of water, so as to obtain, optionally after filtration, an aqueous sodium silicate solution;
d) sulfur dioxide SO₂, preferably the sulfur dioxide obtained in step b), is reacted with said aqueous sodium silicate solution, optionally in the additional presence of water, the reaction preferably being performed at a temperature of between 60 and 100°C, and, for example, for 15 to 180 minutes, so as to obtain a mixture containing precipitated silica and sodium sulfite;
e) the precipitated silica is separated from the sodium sulfite, especially by filtration.

7. Process according to Claim 6, **characterized in that**, in step e), the mixture obtained in step d) is subjected to filtration, and:
- the resulting filter cake is, optionally after acidification, washed and dried, to obtain a precipitated silica;
- preferably, the filtrate, containing the sodium sulfite, is, optionally after drying, recycled into step a).

8. Process according to either of Claims 6 and 7, **characterized in that** the reaction of step d) is stopped when the pH reaches a value of 8.0 to 8.2.
